# EUROPÄISCHE PATENTSCHRIFT

(11) **EP 0 858 757 B1**
(45) Veröffentlichungstag und Bekanntmachung des Hinweises auf die Patenterteilung: **14.01.2004**
(21) Anmeldenummer: 97118888.3
(22) Anmeldetag: 30.10.1997
(51) Int. Cl.: A47J 31/44

(54) **Vorrichtung zur Erzeugung von Milchschaum für Cappuccino**
Device for foaming milk to make cappucino
Dispositif pour émulsifier du lait pour faire du cappucino

(30) Priorität: 14.02.1997 DE 29702568 U
(43) Veröffentlichungstag der Anmeldung: 19.08.1998
(73) Patentinhaber: JURA ELEKTROAPPARATE AG, CH-4626 Niederbuchsiten (CH)
(72) Erfinder: Probst, Emanuel, 8049 Zürich (CH)
(74) Vertreter: Schubert, Siegmar, Dipl.-Ing.

(56) Entgegenhaltungen:
- EP-A- 0 243 326
- EP-A- 0 555 767
- EP-A- 0 719 514
- DE-C- 3 902 281

## Beschreibung

Die Erfindung betrifft eine Vorrichtung zur Erzeugung von Milchschaum für Cappuccino.

EP0243326 beschreibt eine solche Vorrichtung zur Erzeugung von Milchschaum für Cappuccino mit einer stromabwärts eines Dampfrohrs angeordneten Düsenanordnung mit einer Unterdruckkammer, die mit einer Milchzuleitung in Verbindung steht, wobei zwischen der Unterdruckkammer und der Milchzuleitung eine Vormischkammer angeordnet ist, in die ein Luftkanal mündet, wobei stromabwärts der Unterdruckkammer eine Beruhigungsstrecke in Form einer Bohrung angeordnet ist.

Derartige Vorrichtungen stehen generell mit Espressomaschinen in Verbindung und nutzen deren Dampfgenerator.

Bekannte einfache Vorrichtungen zur Erzeugung von Milchschaum für Cappuccino weisen ein mit dem Dampfgenerator der Espressomaschine verbundenes Dampfrohr auf, an dessen Auslaß sich eine Düsenanordnung mit Kanälen zum Ansaugen von Luft und Milch befindet. Diese Düsenanordnung wird zur Erzeugung des Milchschaums unter den Flüssigkeitsspiegel eines mit Milch gefüllten Gefäßes getaucht. Wenn Dampf durch die Düsenanordnung strömt, werden Luft und Milch durch die entsprechenden Kanäle der Düsenanordnung angesaugt und es entsteht der gewünschte Milchschaum. Als nachteilig kann bei dieser Vorrichtung die Handhabung empfunden werden, die das Eintauchen der Düsenanordnung unter den Flüssigkeitsspiegel des mit Milch gefüllten Gefäßes erfordert.

Zum Stand der Technik gehören Vorrichtungen zur Erzeugung von Milchschaum für Cappuccino, welche mit einer Zuführleitung für Milch aus einem externen Milchbehälter ausgebildet sind und die eine Verwirbelungsanordnung aufweisen, in welcher einströmendes Dampf-Luft-Milchgemisch an einer Prallwand verwirbelt und damit aufgeschäumt wird. Die Verwirbelungsanordnung weist eine Öffnung aus, aus der in der Verwirbelungsanordnung entstandener Milchschaum direkt in eine unter ihr gehaltene Kaffeetasse fließen kann. - Trotz dieser technisch verhältnismäßig aufwendigen Ausbildung der Vorrichtung erzeugt diese nicht immer Milchschaum mit den für Cappuccino gewünschten Eigenschaften.

Der vorliegenden Erfindung liegt daher die Aufgabe zugrunde, eine Vorrichtung zur Erzeugung von Milchschaum für Cappuccino der eingangs genannten Gattung so weiterzubilden, daß aus der über eine Zuleitung zugeführten Milch mit unkomplizierten technischen Mitteln, aber hoher Effektivität der für Cappuccino notwendige Milchschaum gebildet wird.

Diese Aufgabe wird gemaß der Erfindung mit den in dem Anspruch 1 angegebenen Merkmalen gelöst.

Diese Lösung geht aus von der bekannten Düsenanordnung mit einer Unterdruckkammer, in die die Milchzuleitung mündet, und sieht vor, daß zwischen der Unterdruckkammer und der Milchzuleitung eine Vormischkammer angeordnet ist, in die ein Luftkanal mündet. In dieser Vormischkammer wird zunächst ein Luft-Milchgemisch gebildet, welches in die Unterdruckkammer einströmt. Dort wird Dampf zugemischt.

Das wie vorstehend gebildete Dampf-Luft-Milchgemisch wird in der nachgeordneten Bohrung als Beruhigungsstrecke komprimiert und beruhigt und tritt stromabwärts am Ende der Bohrung als Milchschaum aus.

Weitere vorteilhafte Ausgestaltungen gehen aus den Ansprüchen 2 bis 4 hervor.

Wenn die Komponenten der Vorrichtung, die mit Milch bzw. Milchschaum in Berührung gelangen, nämlich der Griff mit dem Flußmengenbegrenzer, die Beruhigungsstrecke und die Düsenanordnung, aus schlecht wärmeleitendem Material bestehen, wird ein Anbacken der Milch an diesen Teilen weitgehend vermieden. Es können daher langwierige Reinigungsarbeiten reduziert werden.

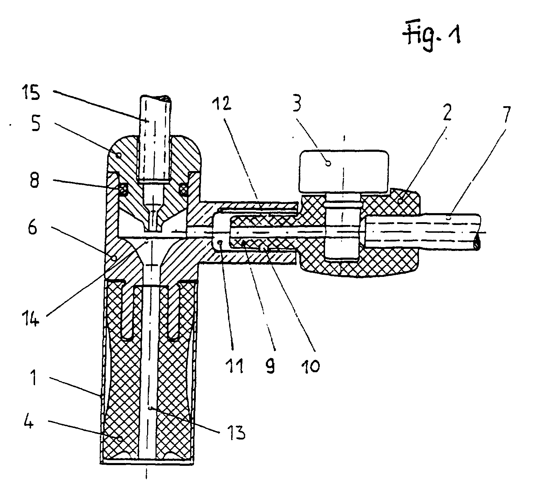

Die Erfindung wird im folgenden anhand einer Zeichnung mit einer Figur erläutert. Fig. 1 zeigt einen Schnitt durch die Vorrichtung in einer in Gebrauchslage senkrechten Ebene.

Die in Fig. 1 dargestellte Vorrichtung besteht im wesentlichen aus einer Düsenanordnung 5, 6 mit einer Unterdruckkkammer 14.

Diese Düsenanordnung 5, 6 ist mit einer Dampfzuleitung 15 verbunden, die von einem Dampfgenerator einer Espressomaschine gespeist wird. Die Unterdruckkammer 14 steht über einem Flußmengenbegrenzer 3 mit einer Milchzuleitung 7 in Verbindung, die von einem externen Milchgefäß ausgeht. Im Verlauf dieser Verbindung ist zwischen der Unterdruckkammer 14 und dem Flußmengenbegrenzer 3 eine Vormischkammer 11 angeordnet, in die ein Luftkanal 12 mündet. Stromabwärts der Unterdruckkammer 14 geht diese in eine Bohrung als Beruhigungsstrecke 13 über. Es hat sich herausgestellt, daß ein Querschnitts-/Längenverhältnis der Bohrung von eins zu zehn besonders günstig ist, um einen guten Milchschaum zu erzeugen.

In Fig. 1 bezeichnet 1 weiter eine Hülse, die einen Auslauf aus Silopren umschließt, aus dem die Beruhigungsstrecke 13 angeformt ist. Mit dem Bezugszeichen 2 ist ein Griff versehen, an dem der Flußmengenbegrenzer 3 erfaßt werden kann, um dessen zylindrischen Ansatz 9 mit einem angeformten Ring 10 in eine nicht bezeichnete Aufnahme der Düsenanordnung zu stecken oder aus dieser herauszuziehen. Der Ring 10 ist geeignet, die Verbindung mit Ausnahme des Luftkanals 12 abzudichten. - Eine Abdichtung zwischen den steckbaren Teilen 5, 6 der Düsenanordnung erfolgt mittels eines O-Rings 8.

Wenn diese Vorrichtung über die Dampfzuleitung 15 mit Dampf beaufschlagt wird, werden über die Milchzuleitung 7 mittels des in der Unterdruckkammer 14 gebildeten Unterdrucks Milch und Luft in die Vormischkammer 11 gesaugt, in der eine Luft-Milchvormischung erfolgt. Das Luft-Milchgemisch strömt in die Unterdruckkkammer 14 ein, in der Dampf zugemischt wird. Das dadurch entstehende Dampf-Luft-Milchgemisch durchströmt anschließend die Beruhigungsstrecke 13, in der es komprimiert und beruhigt wird. Das Dampf-Luft-Milchgemisch tritt in der gewünschten Konsistenz als Milchschaum aus der Beruhigungsstrecke 13 aus.

## Patentansprüche

1. Vorrichtung zur Erzeugung von Milchschaum für Cappuccino mit einer stromabwärts eines Dampfrohrs (15) angeordneten Düsenanordnung (5, 6) mit einer Unterdruckkammer (14), die mit einer Milchzuleitung (7) in Verbindung steht, wobei zwischen der Unterdruckkammer (14) und der Milchzuleitung (7) eine Vormischkammer (11) angeordnet ist, in die ein Luftkanal (12) mündet,
wobei stromabwärts der Unterdruckkammer (14) eine Beruhigungsstrecke (13) in Form einer Bohrung nachgeordnet ist, deren Querschnitts-/Längenverhältnis eins zu zehn ist.

2. Vorrichtung nach Anspruch 1,
**dadurch gekennzeichnet,**
**daß** Komponenten (2, 4, 5 und 6) der Vorrichtung Steckverbindungen aufweisen, mittels derer die Komponenten zusammensetzbar sind.

3. Vorrichtung nach Anspruch 1 oder 2,
**dadurch gekennzeichnet,**
**daß** Komponenten (2, 4, 5 und 6) der Vorrichtung Schraubgewinde aufweisen, mittels derer die Komponenten der Vorrichtung zusammenschraubbar sind.

4. Vorrichtung nach einem der vorangehenden Ansprüche,
**dadurch gekennzeichnet,**
**daß** Komponenten (2, 4, 5 und 6) der Vorrichtung aus schlecht wärmeleitendem Material bestehen.

## Claims

1. Device for foaming milk to make capuccino, having a nozzle arrangement (5, 6) positioned downstream from a steam pipe (15) with a low pressure chamber ( 14), which is connected to a milk feed line (7), such that between the low-pressure chamber (14) and the milk feed line (7) is arranged a pre-mixing chamber (11) into which an air duct (12) opens,
and such that downstream from the low-pressure chamber (14) is connected a smoothing stretch (13) in the form of a bore whose cross-section/length ratio is one to ten.

2. Device according to Claim 1,
**characterised in that**
components (2, 4, 5 and 6) of the device have plug-in connections by means of which they can be assembled together.

3. Device according to Claims 1 or 2,
**characterised in that**
components (2, 4, 5 and 6) of the device have screw threads by means of which the components of the device can be screwed together.

4. Device according to any of the preceding claims,
**characterised in that**
components (2, 4, 5 and 6) of the device consist of material with poor thermal conductivity.

## Revendications

1. Dispositif pour générer de la mousse de lait pour cappuccino présentant un dispositif à gicleur (5, 6), disposé en aval d'un tuyau de vapeur (15), et comportant une chambre de dépression (14) qui est en relation avec une conduite d'amenée du lait (7), dans lequel, entre la chambre de dépression (14) et la conduite d'amenée du lait (7) est disposée une chambre de pré-mélange (11) dans laquelle débouche un canal d'arrivée d'air (12), où, en aval de la chambre de dépression (14) est disposée une trajectoire de repos (13) sous la forme d'un perçage dont le rapport entre section et longueur est de un pour dix.

2. Dispositif selon la revendication 1, **caractérisé en ce que** les composants (2, 4, 5 et 6) du dispositif présentent des fiches de connexion au moyen desquelles les composants peuvent être assemblés.

3. Dispositif selon la revendication 1 ou 2, **caractérisé en ce que** les composants (2, 4, 5 et 6) du dispositif présentent des filetages au moyen desquels les composants peuvent être assemblés.

4. Dispositif selon l'une des revendications précédentes, **caractérisé en ce que** les composants (2, 4, 5 et 6) du dispositif se composent d'un matériau faiblement conducteur de chaleur.
